# EUROPÄISCHE PATENTSCHRIFT

(11) **EP 1 623 360 B1**
(45) Veröffentlichungstag und Bekanntmachung des Hinweises auf die Patenterteilung: **23.08.2006**
(21) Anmeldenummer: 04728775.0
(22) Anmeldetag: 22.04.2004
(51) Int. Cl.: G06K 13/00, G06K 7/00

(54) **KARTENAUFNAHMEVORRICHTUNG UND VERFAHREN**
CARD RECEPTACLE AND ASSOCIATED METHOD
DISPOSITIF DE RECEPTION DE CARTE ET PROCEDE

(30) Priorität: 12.05.2003 DE 10321251
(43) Veröffentlichungstag der Anmeldung: 08.02.2006
(73) Patentinhaber: SIEMENS AKTIENGESELLSCHAFT, 80333 München (DE)
(72) Erfinder: RIESTER, Thomas, 78052 Villingen-Schwenningen (DE); KLOSTERMEIER, Dieter, 78050 Villingen-Schwenningen (DE); WAHLER, Torsten, 78073 Bad Dürrheim (DE); WOLF, Peter, 78078 Niedereschach (DE)
(86) Internationale Anmeldenummer: PCT/EP2004/004293
(87) Internationale Veröffentlichungsnummer: WO 2004/100076

(56) Entgegenhaltungen:
- EP-A- 0 282 296
- EP-A- 0 311 118
- EP-A- 0 313 093
- EP-A- 0 923 042
- DE-A1- 3 929 141
- US-A- 4 724 310
- US-A- 4 835 375

## Beschreibung

Die Erfindung betrifft eine Kartenaufnahmevorrichtung, insbesondere für einen Fahrtenschreiber in einem Kraftfahrzeug in Flachbauweise, mit einer Aufnahmeöffnung zur Aufnahme einer Karte, welche einen Speicher für Daten aufweist, mit einem Verschluss zum Verschließen der Aufnahmeöffnung, mit einer Verriegelungseinheit, welche mindestens ein Verriegelungselement aufweist, welches in eine Verriegelt-Stellung bewegbar ist, in welcher das mindestens eine Verriegelungselement den Verschluss verriegelt, wobei die Kartenaufnahmevorrichtung mindestens einen ersten Sensor aufweist und die Stellung des mindestens einen Verriegelungselements mittels des ersten Sensors erfassbar ist. Daneben ist ein Verfahren zur Aufnahme einer Karte mittels der genannten Kartenaufnahmevorrichtung, bei welchem während einer Eingabephase die Karte in die Kartenaufnahmevorrichtung eingegeben wird, Gegenstand der Erfindung.

Eine derartige Kartenaufnahmevorrichtung und ein Verfahren zur Aufnahme einer Karte sind aus der DE 39 29 141 A1 bekannt. Über die Verriegelung des Verschlusses hinaus sind jedoch keine weiteren Maßnahmen zur Erhöhung der Manipulationssicherheit der Kartenaufnahmevorrichtung vorgesehen.

Weitere Kartenaufnahmevorrichtungen sind in der EP 0 282 296 A2 und der US 4 835 375 beschrieben. Die EP 0 282 296 A2 offenbart ein Lese-Schreibgerät für eine IC-Karte, bei dem ein Haken die eingeschobene Karte in dem Gerät arretiert. Dieser Haken verschließt jedoch nicht die Aufnahmeöffnung und er ist auch nicht zusätzlich verriegelt.

Der US 4 835 375 kann ein Lese-Schreibgerät für eine IC-Karte entnommen werden, bei dem mittels eines Sensors sowohl das Erreichen der Schreib-/Leseposition durch die Karte als auch das Arretieren eines Schlittens erkannt wird. Ein Verschluss für die Aufnahmeöffnung ist nicht vorgesehen.

Der Schwerpunkt der Anwendung der erfindungsgemäßen Vorrichtung und des erfindungsgemäßen Verfahrens liegen im Bereich von Fahrtenschreibern bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens oder bei Schließsystemen. Vorteilhafte Anwendung findet die Erfindung in Kombination mit allen Arten von kartenförmigen Datenträgern. Auf Grund der hohen wirtschaftlichen und rechtlichen Bedeutung der zu erfassenden Daten bei Fahrtenschreibern, müssen die Aufzeichnungen zuverlässig gegen Manipulationen gesichert werden. Die Sicherungsmaßnahmen betreffen sowohl die Datenerfassung und Datenübertragung als auch die Übertragung und Speicherung der erfassten Daten im Speicher der Karte. Einschlägige Normen stellen strenge Anforderungen an den durch die Maßnahmen zu erreichenden Sicherheitsstandard. So ist vorgeschrieben, dass die Karte während der Lese- und Schreibvorgänge vollständig von der Kartenaufnahmevorrichtung aufgenommen ist und gegen die Umwelt mittels geeigneter Verschlussvorrichtungen isoliert ist. Die Verschlussvorrichtungen müssen in der Geschlossen-Stellung während der Lese- und Schreibvorgänge arretiert sein. Zusätzliche Schwierigkeiten ergeben sich auf Grund durch Verschmutzung bedingter Funktionsausfälle herkömmlicher Vorrichtungen, insbesondere durch Kontaktunterbrechungen oder sogar beim Einzug der Karte. Der Einzug und die exakte Positionierung der Karte an den Kontakten der Vorrichtung sind problematisch, weil die Karten im Verhältnis zu der erforderlichen Positionsgenauigkeit zu den Kontakten der Vorrichtung hohe Fertigungstoleranzen aufweisen. Da die Karten sich in der Wahrnehmung des Benutzers vor allem durch eine hohe Robustizität auszeichnen, werden diese in der Regel nicht mit der eigentlich erforderlichen Sorgfalt behandelt, so dass zusätzlich zu den durch die Fertigung bedingten Toleranzen Verformungen und Beschädigungen die Funktionsweise im Zusammenspiel mit den Kartenaufnahmevorrichtungen beeinträchtigen. Darüber hinaus stellen die Betriebsbedingungen in Kraftfahrzeugen erhöhte Anforderungen an die Funktionssicherheit auf Grund der starken Schwingungen und unzähligen Stöße sowie der weitreichenden Temperaturschwankungen. Die Realisierung der Manipulationssicherheit und der gewünschte Komfort bei der Handhabung machen einen vollautomatischen Karteneinzug erforderlich. Diesem Erfordernis nachzukommen stellt die Konstruktion jedoch vor große Schwierigkeiten, weil der zur Verfügung stehende Bauraum in einem Fahrtenschreiber in der Größe eines Autoradios nur etwa eine Höhe von 10 mm für den vollautomatischen Einzug bereitstellt.

Aus der Notwendigkeit des vollautomatischen Karteneinzugs ergeben sich große technische Schwierigkeiten, welche insbesondere in dem Erfordernis einer schadensfrei betreibbaren, robusten und manipulationssicheren Mechanik und Elektronik auf geringstem Bauraum begründet sind. Das Erfordernis der Robustizität wird vor besondere Herausforderungen gestellt, wenn es zu Fehlbedienungen kommt. Daneben ist die regelmäßig mangelhafte Präzision der menschlichen Motorik bei der Bedienung des Geräts im Verhältnis zu der erforderlichen Genauigkeit der Feinmechanik der Vorrichtung mittels entsprechend ausgleichender Vorkehrungen zu berücksichtigen.

Aus der DE 101 53 995 ist bereits ein Chipkarten-Aufnahmegerät mit Verriegelungsmitteln bekannt. Es hat sich jedoch gezeigt, dass bei der vorgeschlagenen Ausführungsform die zuvor erwähnten Probleme eine unzureichende Berücksichtigung finden, als es insbesondere gehäuft zu Beschädigungen der Vorrichtung infolge von Fehlpositionierungen der aufzunehmenden Karte gekommen ist.

Ausgehend von den Problemen von Nachteilen des Standes der Technik liegt der Erfindung die Aufgabe zugrunde, eine Kartenaufnahmevorrichtung und ein Verfahren zur Aufnahme einer Karte in eine entsprechende Vorrichtung zu schaffen, welche den hohen mechanischen Belastungen im Betrieb, insbesondere der Belastung bei Fehlbedienungen gewachsen ist.

Zur Lösung der Aufgabe schlägt die Erfindung eine eingangs genannte Kartenaufnahmevorrichtung vor, die eine Arretiereinheit aufweist, welche in eine Arretiert-Stellung bewegbar ist und in der Arretiert-Stellung die in der Verriegelt-Stellung befindliche Verriegelungseinheit arretiert. Daneben wird ein eingangs erwähntes Verfahren vorgeschlagen, bei welchem nach der Eingabephase der Karte in die erfindungsgemäße Kartenaufnahmevorrichtung sich das mindestens eine Verriegelungselement in eine Verriegelt-Stellung bewegt, in welcher der Verschluss der Aufnahmeöffnung für die Karte mittels des mindesschluss der Aufnahmeöffnung für die Karte mittels des mindestens einen Verriegelungselementes verriegelt ist, der erste Sensor die Verriegelt-Stellung des mindestens einen Verriegelungselementes erfasst und während einer Sicherungsphase die Arretiereinheit in eine Arretiert-Stellung bewegt wird, in welcher die Verriegelungseinheit mittels der Arretiereinheit arretiert ist.

Mit der sensorischen Überwachung der Verriegelungseinheit hat die Erfindung die Schlüsselrolle der Verriegelung im Rahmen der Aufnahme der Karte erkannt. Dieser Erkenntnis liegt die Erfahrung zugrunde, dass ein Großteil der Beschädigungen, insbesondere in Form von Verkantungen der aufzunehmenden Karte in der Vorrichtung, auf eine Fehlpositionierung in Relation zu den Verriegelungselementen der Verriegelungseinheit zurückzuführen ist. Da die gesamte Vorrichtung auf verhältnismäßig engem Raum zu betreiben ist, ist das zur Verfügung stehende Spiel zwischen der in das Innere der Vorrichtung transportierten Karte, dem Verschluss und der Verriegelungseinheit verhältnismäßig knapp bemessen, so das bereits kleinere Fehlpositionierungen zu folgenschweren Blockaden der Vorrichtung führen können. Somit hat die sensorische Überwachung auf Grund der Schlüsselfunktion der zu überwachenden mechanischen Bauteile besondere Vorteile.

Die Manipulationssicherheit erhöht sich zusätzlich dadurch, dass die Kartenaufnahmevorrichtung eine Arretiereinheit aufweist, welche in eine Arretiert-Stellung bewegbar ist und in der Arretiert-Stellung die in der Verriegelt-Stellung befindliche Verriegelungseinheit arretiert. Eine an dem Verschluss in betrügerischer Absicht versuchte Manipulation wird mit doppelter Sicherheit unterbunden, da zunächst die Verriegelung und anschließend die Arretierung umgangen werden muss.

Eine vorteilhafte Weiterbildung der erfindungsgemäßen Kartenaufnahmevorrichtung sieht vor, dass die Kartenaufnahmevorrichtung eine zentrale Steuerung aufweist, welche mit dem ersten Sensor in Verbindung steht. Vorteilhaft kann die zentrale Steuerung den Status der Verriegelungseinheit permanent oder situationsabhängig abfragen und diese Information bei der funktionsgerechten Steuerung sämtlicher anzusteuernder Elemente, wie z. B. Antriebe oder Anzeigeeinheiten, berücksichtigen.

Eine erhöhte Absicherung gegenüber Fehlfunktionen ergibt sich, wenn die Kartenaufnahmevorrichtung mindestens einen zweiten Sensor aufweist, der zweite Sensor mindestens eine Phase der Aufnahme der Karte erfasst und zu Beginn und/oder zum Ende der Phase mindestens ein Signal an die zentrale Steuerung sendet.

Damit es nicht zu Beschädigungen an der Verriegelungseinheit oder der Arretiereinheit kommt, ist es zweckmäßig, wenn der zweite Sensor den Beginn oder das Ende der Arretierung der Verriegelungseinheit in der Verriegelt-Stellung der Karte erfasst und zu Beginn und/oder zum Ende der Arretierung der Verriegelungseinheit mindestens ein Signal an die zentrale Steuerung sendet. Vorteilhaft erhält die zentrale Steuerung damit eine Information über den Status der Arretiereinheit und kann abhängig davon die Einleitung weiterer Schritte zur Aufnahme der Karte oder zur Datenübertragung steuern. Gleichzeitig kann mittels dieser Sensorik, ggf. in Kombination mit dem ersten Sensor, die ordnungsgemäße Verriegelung und Arretierung des Verschlusses überwacht werden, so dass während Datenübertragungen zwischen der Karte und der Vorrichtung keinerlei Manipulation unbemerkt erfolgen kann. Zweckmäßig leitet die zentrale Steuerung einen Datenübertragungsvorgang zu der aufnehmenden Karte nur dann ein, oder erhält ihn aufrecht, wenn der erste Sensor signalisiert, dass die Verriegelungseinheit in der Verriegelt-Stellung ist und der zweite Sensor signalisiert, dass die Arretiereinheit in der Arretiert-Stellung ist.

Anstatt einer direkten Überwachung oder in Ergänzung zu einem direkt überwachenden Sensor kann es einerseits kostengünstiger und andererseits funktionsgerechter sein, wenn die Kartenaufnahmevorrichtung mindestens ein bewegliches Getriebeelement aufweist, welches in der Weise ausgebildet und in die Kinetik der Kartenaufnahmevorrichtung eingekoppelt ist, dass jeder Stellung dieses Getriebeelementes während des Transportes der Karte in eine Endstellung eindeutig eine Bewegungsphase des Einzugs, der Verriegelung und/oder der Arretierung der Verriegelung zuordenbar ist. Weist das Getriebe ein solches Getriebeelement auf, so besteht die Möglichkeit, das beispielsweise der zweite Sensor oder ein weiterer Sensor an das Getriebeelement sensorisch angekoppelt ist, mindestens eine Stellung des Getriebeelementes mittels des Sensors erfassbar ist und auf diese Weise der Beginn und/oder das Ende der Bewegungsphase mittels der kinetischen Zuordnung erfassbar ist. Als Bewegungsphase sind hierbei insbesondere die Anfangs- und Endzeitpunkte des Verschließens, Verriegelns, Arretierens denkbar oder auch eines Klemmens oder Greifens und Transportierens der aufzunehmenden Karte, ggf. auch eines Feinpositionierens der Karte.

Die einzelnen Sensoren sind je nach Einbausituation und Verwendungszweck vorteilhaft optisch, induktiv, kapazitiv und/oder mechanisch in ihrer Funktionsweise. Gute Funktion wird regelmäßig durch einen optischen Sensor bei der Erfassung der Stellung der beweglichen Bauelemente erzielt, insbesondere mit Gabellichtschranken, welche mit an den zu überwachenden Bauteilen angebrachten Fahnen zusammenwirken.

Eine zuverlässige Manipulationssicherheit ist regelmäßig nur zu erreichen, wenn die Karte vollständig ins Innere der Kartenaufnahmevorrichtung einziehbar ist. Zusätzliche Sicherheit gegenüber Manipulationsversuchen ergibt sich, wenn das Verriegelungselement nicht nur einen die Aufnahmeöffnung verschließenden Verschluss in einer Verschlossen-Stellung verriegelt, sondern auch in der Verriegelt-Stellung zumindest teilweise den lichten Querschnitt der Aufnahmeöffnung versperrt. Selbst wenn der die Aufnahmeöffnung verschließende Verschluss beschädigt sein sollte, bleibt der Zugriff auf die in der Kartenaufnahmevorrichtung befindliche Karte wegen des Verriegelungselementes verwehrt.

Damit die hohen Sicherheitsanforderungen auch während der Datenübertragung zwischen dem Speicher der Karte und der Kartenaufnahmevorrichtung bzw. dem Fahrtenschreiber erfüllt sind, ist es zweckmäßig, wenn die Stellung des Verriegelungselementes in der Verriegelt-Stellung permanent mittels des ersten Sensors abfragbar ist und der erste Sensor mittels an die zentrale Steuerung übersendeter Signale der zentralen Steuerung permanent die erfasste Stellung signalisiert. Auf diese Weise kann in den Speicher der Karte auch der Verlust der Verriegelt-Stellung während einer Datenübertragung gespeichert werden, wodurch Manipulationsversuche entsprechend nachweisbar werden.

Um die Fehleranfälligkeit der erfindungsgemäßen Vorrichtung weiter zu reduzieren, ist es zweckmäßig, wenn die Kartenaufnahmevorrichtung einen dritten Sensor aufweist, welcher die Anwesenheit der aufzunehmenden Karte in der Vorrichtung erfasst. Auf diese Weise kann ein manipulativer oder versehentlich ausgelöster Einzugsvorgang ohne Karte nach Detektion der Abwesenheit der Karte abgebrochen werden, und das System kann in den Ausgangszustand zurückversetzt werden. Hierbei ist es sinnvoll, wenn der dritte Sensor von der aufzunehmenden Karte selbst oder von einer in Einwärtsrichtung bewegbaren Kartenaufnahmeeinheit betätigbar ausgebildet ist. Eine mechanische Funktionsweise ist hierbei besonders vorteilhaft, da derartige Sensoren in der Regel keine Hilfsenergie benötigen und daher energiesparend und besonders ausfallsicher sind. Aus der Unabhängigkeit von einer Energieversorgung der Sensoren ergibt sich der weitere Vorteil, dass mittels eines solchen Sensors die Energieversorgung der Kartenaufnahmevorrichtung oder einzelner Module dieser Vorrichtung einschaltbar ist. Eine vorteilhafte Weiterbildung der Erfindung sieht vor, dass ein dritter Sensor als bei Betätigung geöffneter Schalter, bzw. Öffner und von einer mit der Karte sich in Einwärtsrichtung bewegenden Kartenaufnahmeeinheit betätigbar ausgebildet ist, so dass er, wenn sich keine Karte in der Kartenaufnahmevorrichtung befindet, betätigt und der Schalter geöffnet ist, bei einer Einzugsbewegung der Kartenaufnahmevorrichtung nicht mehr betätigt wird und der Schalter in eine Geschlossen-Stellung wechselt. Diese Ausbildung hat den besonderen Vorteil, dass keinerlei Kulisse zur Betätigung des dritten Sensors vorzusehen ist, der in Abhängigkeit von der Bewegungsphase der Karte den Sensor bzw. den Schalter in die Geschlossen-Stellung bringt, sondern die ruhende Stellung bei Abwesenheit einer Karte zur Betätigung des Schalters bzw. zur Unterbrechung eines Stromkreises genutzt wird.

Um die Bereitschaft zur Datenübertragung zwischen der Karte und dem Fahrtenschreiber in eine Endposition der Karte zu erfassen, ist es zweckmäßig, wenn die Kartenaufnahmevorrichtung einen vierten Sensor aufweist, mittels welchem erfassbar ist, ob die Karte die Endstellung in der Kartenaufnahmevorrichtung erreicht hat. Auf Grund der verhältnismäßig engen Maßtoleranzen der auf den genormten Karten angeordneten Kontakte ist es sinnvoll, wenn der vierte Sensor einstückig mit einem zur Kontaktierung der Karte vorgesehenen Kontaktsatz ausgebildet ist. Auch hier bietet sich die Verwendung eines mit mechanischen Elementen versehenen Schalters an. Die Vorteile der Erfindung kommen in vollem Umfang zum Tragen, wenn die Karte automatisch einziehbar und/oder ausgebbar ist.

Eine vorteilhafte Weiterbildung des erfindungsgemäßen Verfah rens sieht vor, dass während der Eingabephase die in die Kar tenaufnahmevorrichtung eingegebene Karte mittels des dritten Sensors erfasst wird, die Eingabe an eine zentrale Steuerung signalisiert wird und die zentrale Steuerung die Energieversorgung eines Antriebes einschaltet. Neben dem Antrieb könnei auch weitere, insbesondere verbrauchsintensive elektrische Bauelemente, welche zuvor von der Energieversorgung getrennt waren, von der zentralen Steuerung eingeschaltet werden, bei spielsweise Anzeigenbeleuchtungen. Auf diese Weise werden die zur Verfügung stehenden Energieressourcen geschont.

Besonders Platz sparend gestaltet sich die erfindungsgemäße Vorrichtung und das damit verknüpfte erfindungsgemäße Verfah ren, wenn nach der Eingabephase während einer Greifphase eine Klemmeinheit die Karte klemmt und während einer Transportpha se die Karte in die Aufnahmevorrichtung transportiert wird. Die Verwendung einer Klemmeinheit hat im Gegensatz zu dem Transport mittels Gummiwalzen den Vorteil, dass die Klemmeinheit eine besonders flache Bauweise ermöglicht, wohingegen die Funktion eines Antriebes mittels Walzen einen bestimmten Mindestdurchmesser der einzelnen Walzen und abhängig von der Länge der Transportstrecke eine gewisse Anzahl der Walzen erfordert. Um ein hohes Maß an Funktionalität und Sicherheit zi gewährleisten, ist es zweckmäßig, wenn nach der Eingabephase, Transportphase und/oder Greifphase während einer Vorpositionierphase die Klemmung der Klemmeinheit von der Karte gelöst wird, der zweite Sensor das Ende der Vorpositionierphase erfasst und an die zentrale Steuerung signalisiert. Erst das Lösen der Klemmeinheit ermöglicht die Korrektur der manueller Eingabeungenauigkeiten der Karte in die Klemmeinheit, und das Signal des zweiten Sensors gibt der zentralen Steuerung einen Informationsrückfluss über den Ablauf des Aufnahmevorgangs.

Zur Korrektur der ungenauen händischen Eingabe der aufzunehmenden Karte in die Kartenaufnahmevorrichtung sieht eine vorteilhafte Weiterbildung des erfindungsgemäßen Verfahrens vor, dass nach der Eingabephase, Transportphase, Greifphase und/oder Vorpositionierphase während einer Feinpositionierphase die Verriegelungseinheit sich in die Verriegelt-Stellung bewegt, die Karte dabei in die Endposition transportiert, in welcher erste Kontakte eines Kontaktsatzes mit zweiten Kontakten der Karte in Verbindung stehen. Die Aufspaltung des Transports der Karte in eine Einzugsphase, in welcher die Karte zunächst das Innere der Kartenaufnahmevorrichtung transportiert wird und in eine Feinpositionierphase, erlaubt eine fehlerfreie Datenübertragung trotz der regelmä-ßig ungenauen händischen Eingabe der Karte und der verhältnismäßig engen Maßtoleranzen der Kontakte an der Karte. Zur Überwachung der erfolgreichen Feinpositionierung der Karte ist es zweckmäßig, wenn der vierte Sensor die Endposition der Karte erfasst und an die zentrale Steuerung signalisiert.

Eine die gesetzlichen Vorschriften vollumfänglich erfüllende Ausgestaltung des erfindungsgemäßen Verfahrens sieht vor, dass nach der Eingabephase, Transportphase, Greifphase, Vorpositionierphase und/oder Feinpositionierphase während einer Sicherungsphase die Arretiereinheit in die Arretiert-Stellung bewegt wird, in welcher die Verriegelungseinheit mittels der Arretiereinheit arretiert ist. Die Manipulationssicherheit und die Funktionssicherheit werden zusätzlich erhöht dadurch erhöht, dass der zweite Sensor die Arretiert-Stellung der Arretiereinheit erfasst und an die zentrale Steuerung signalisiert. Eine permanente Überwachung dieses Signals ermöglicht den Nachweis einer unvorhergesehenen Bewegung der Arretiereinheit aus der Arretiert-Stellung heraus. Gleichzeitig kann die zentrale Steuerung den Antrieb der Kartenaufnahmevorrichtung abschalten. Das Abschalten des Antriebes erfolgt energiesparend zweckmäßig nur dann, wenn der Zeitraum zwischen dem Signal, welches das Ende der Vorpositionierphase signalisiert und dem Signal, welches das Erreichen der Verriegelt-Stellung der Verriegelungseinheit signalisiert einen vorgegebenen Wert nicht überschreitet, da sonst die Wahrscheinlichkeit einer Fehlfunktion erhöht ist. Bei Überschreitung des Zeitwertes ist es zweckmäßig, wenn die zentrale Steuerung einen Vorgang zur Ausgabe der Karte einleitet.

Eine nach der Eingabephase, Transportphase, Greifphase, Vorpositionierphase, Feinpositionierphase und/oder Sicherungsphase sich anschließende Datenübertragungsphase, in welcher Informationen zwischen dem Speicher der Karte und der Kartenaufnahmevorrichtung bzw. dem Fahrtenschreiber übertragen werden, sollte unterbrochen werden, wenn der zweite Sensor die Arretiert-Stellung der Arretiereinheit nicht mehr signalisiert oder der erste Sensor die Verriegelt-Stellung nicht mehr signalisiert bzw. wenn einer der beiden Sensoren ein Verlassen der zu überwachenden Stellung anzeigt.

In der Folge ist ein spezielles Ausführungsbeispiel der erfindungsgemäßen Kartenaufnahmevorrichtung bzw. des erfindungsgemäßen Verfahrens zur Verdeutlichung der Erfindung unter Bezugnahme auf Zeichnungen näher beschrieben. Es zeigen:
- Figur 1: eine perspektivische Ansicht einer Kartenaufnahmeeinheit,
- Figur 2: eine perspektivische Ansicht eines Kontaktsatzes mit Blick auf die Kontakte,
- Figur 3: eine perspektivische Ansicht eines erfindungsgemäßen Getriebeelementes,
- Figur 4: eine Leiterplatte für eine erfindungsgemäße Kartenaufnahmevorrichtung eines Fahrtenschreibers,
- Figur 5: eine perspektivische Ansicht eines Verriegelungselementes, welches bei der erfindungsgemäßen Kartenaufnahmevorrichtung des vorgestellten Ausführungsbeispiels auf der rechten Seite angeordnet ist,
- Figuren 6 bis 10: je eine Sicht von unten auf eine erfindungsgemäße Kartenaufnahmevorrichtung in unterschiedlichen Phasen der Aufnahme einer Karte,

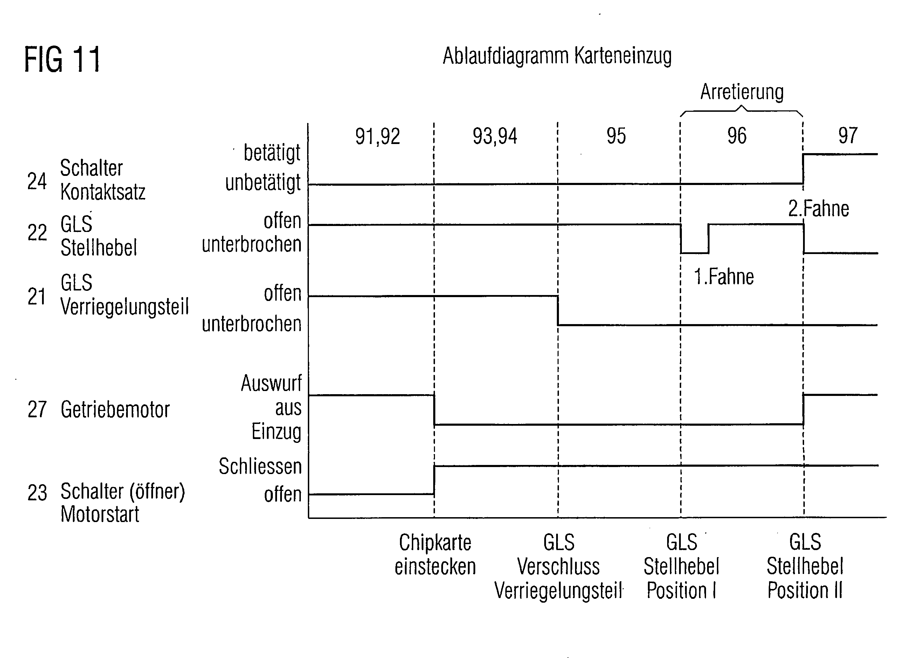

- Figuren 11 u. 12: je ein Ablaufdiagramm eines Karteneinzugs mittels einer erfindungsgemäßen Kartenaufnahmevorrichtung.

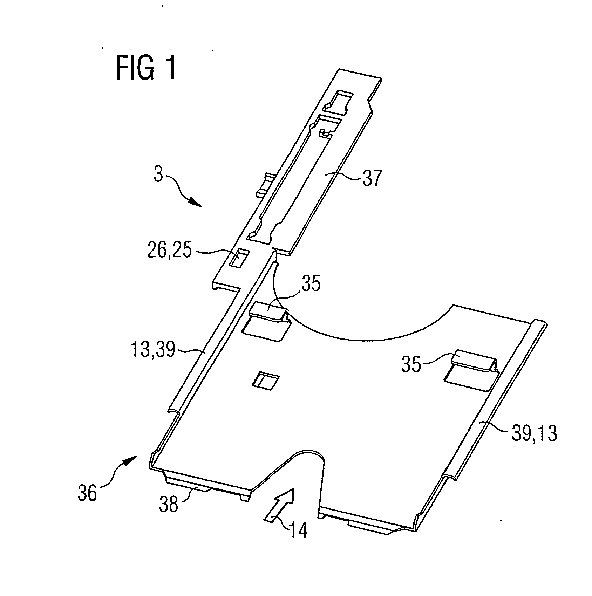

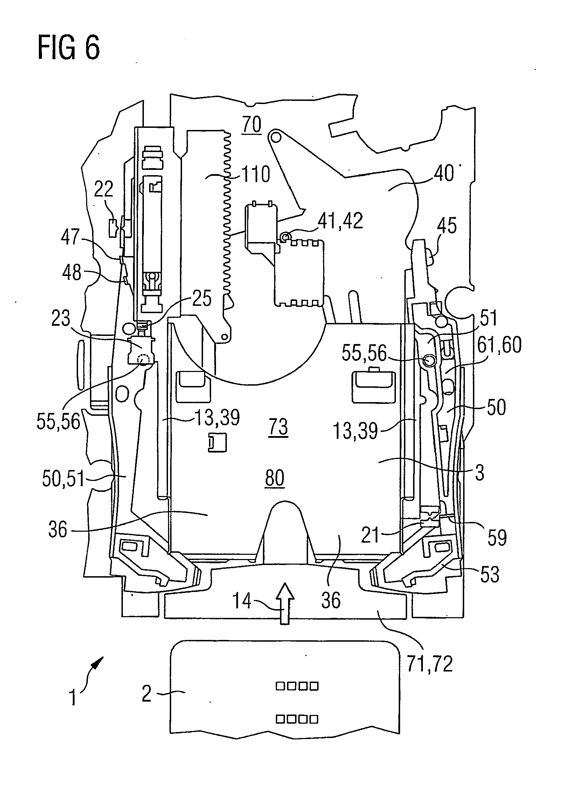

Die in Figur 1 vereinfacht dargestellte Kartenaufnahmeeinheit 3 umfasst im Wesentlichen einen Schlitten 36 und einen Ausleger 37, an welchem ein in Figur 6 dargestelltes Zahnstangenelement 110 federnd angebracht wird. In eine Einwärtsrichtung 14, in der sich der Ausleger 37 erstreckt, verläuft eine erste lineare Lagerung 13, welche als zwei seitlich des Schlittens 36 angeordnete Gleitlagerflächen 39 ausgebildet ist. Der Schlitten 36 wirkt mit einem nicht dargestellten Klemmelement zusammen, so dass eine nicht dargestellte aufzunehmende Karte 2 zangenartig von der Kartenaufnahmeeinheit 3 geklemmt wird. Zu diesem Zweck wird eine nicht dargestellte Karte 2 über eingangsseitige Einlaufschrägen 38 entlang des Schlittens 36 bis an zwei Anschläge 35 geschoben, so dass ein fortgesetzter Druck gegen die eingegebene Karte 2 die Kartenaufnahmeeinheit 3 in Einwärtsrichtung 14 bewegt. Ein in den Figuren 6 bis 10 als Öffner ausgebildeter dritter Sensor 23 wird von einem sich mit der Kartenaufnahmeeinheit 3 in Einwärtsrichtung 14 bewegenden Vorsprung 25 entlastet, so dass der als Schalter ausgebildete dritte Sensor 23 nicht mehr betätigt wird und in Geschlossen-Stellung wechselt.

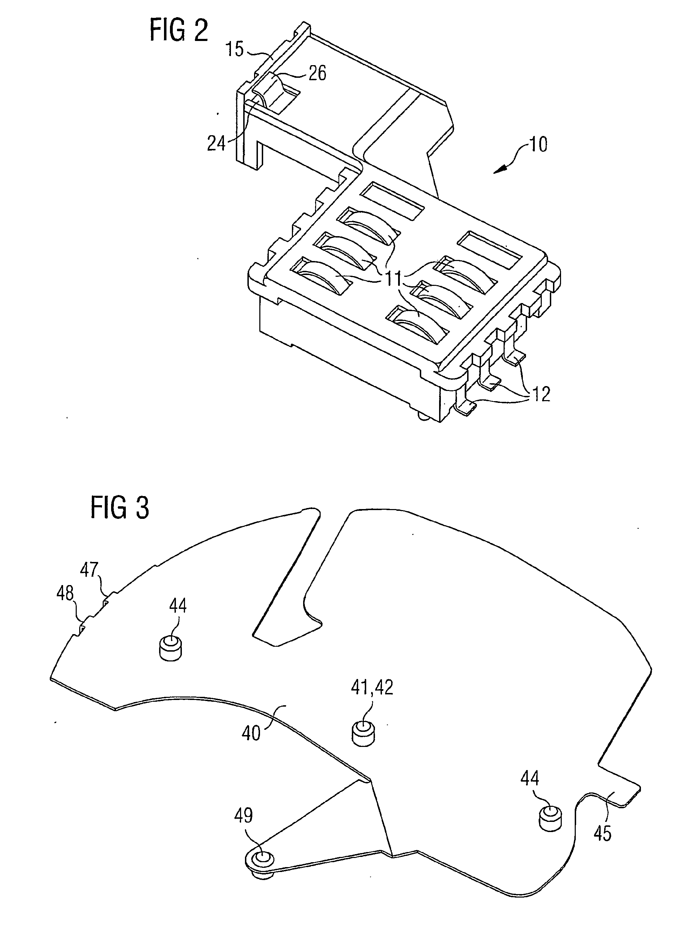

In Figur 2 ist ein Kontaktsatz 10 dargestellt, welcher als wesentliche Bauteile sechs Kontakte 11, verschiedene Anschlüsse 12, einen zweiten Anschlag 15 und einen vierten Sensor 24 aufweist. Der zweite Anschlag 15 ist einstückig mit dem Kontaktsatz 10 ausgebildet, da auf diese Weise eine hohe Maßhaltigkeit zwischen den Kontakten 11 und der Anschlagkante des Anschlags 15 erzielt werden kann. Der vierte Sensor 24 weist ein mechanisches Betätigungselement 26 auf, das die eine Endposition erreichende Karte 2 an der in Einwärtsrichtung 14 führenden Stirnseite berührt und diesen Vorgang an eine nicht dargestellte zentrale Steuerung signalisiert.

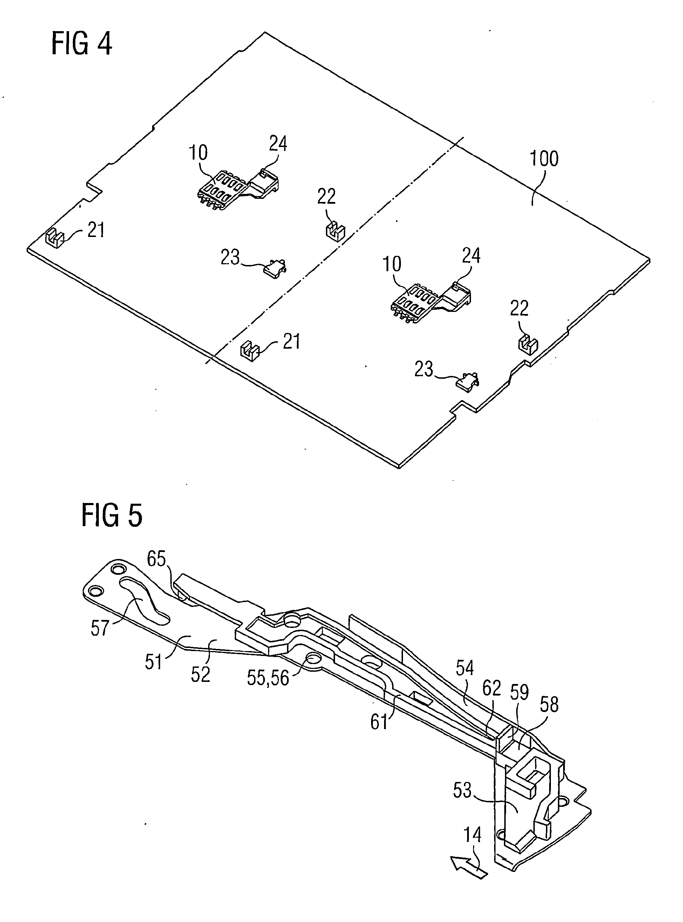

Figur 3 zeigt ein zentrales Getriebeelement 40 isoliert, welches in den Figuren 6 bis 10 im Zusammenwirken mit einer Verriegelungseinheit 50 und einer Arretiereinheit 60 in verschiedenen Bewegungsphasen dargestellt ist. In einer zentralen ersten Drehachse 41 ist das Getriebeelement 40 mit einem Vorsprung versehen, um welchen es drehbar an einem in Figuren 6 bis 10 dargestellten Träger 70 angebracht ist. Ein an einem Ausleger 43 angebrachter erster Zapfen 49 dient der Krafteinleitung mittels eines nicht dargestellten Antriebes. Das Getriebeelement 40 überträgt die eingeleitete Kraft des Antriebes mittels exzentrisch angeordneter zweiter Zapfen 44 auf die Verriegelungseinheit 50. Mittels eines am Außenumfang angeordneten Mitnehmers 45 überträgt das Getriebeelement 40 die Betätigungskraft auf die Arretiereinheit 60. Das Getriebeelement 40 ist als gestanztes Blechteil ausgebildet und ist am Außenumfang mit zwei abgebogenen Vorsprüngen 47, 48 versehen, welche als Signalgeber für die Stellung des Getriebeelementes 40 im Zusammenwirken mit einem in Figur 4 dargestellten, als Gabellichtschranke ausgeführten zweiten Sensor 22 ausgebildet sind.

In Figur 4 ist eine Leiterplatte 100 für zwei nebeneinander angeordnete erfindungsgemäße Kartenaufnahmevorrichtungen 1 dargestellt, welche vollständig in SMD-Technik zu bestücken ist, so dass keinerlei flexible Leitungen benötigt werden. Als wesentliche Bauteile sind für je eine Kartenaufnahmevorrichtung 1 jeweils ein zentral angeordneter Kontaktsatz 10, ein erster Sensor 21, welcher als Gabellichtschranke zur Detektion eines Verriegelungselementes 51 der Verriegelungseinheit 50 ausgebildet ist, ein zweiter Sensor 22, welcher ebenfalls als Gabellichtschranke zur Detektion der Bewegungsphase der Arretiereinheit 60 über das Getriebeelement 40 als Gabellichtschranke ausgebildet ist und ein dritter Sensor 23, welcher als mechanisch zu betätigender Schalter zur Registrierung der Eingabe einer Karte 2 ausgebildet ist.

In Figur 5 ist ein Verriegelungselement 51 der Verriegelungseinheit 50 gemeinsam mit einem Arretierelement 61 der Arretiereinheit 60 dargestellt. Wesentliche Bestandteile des Verriegelungselementes 51 sind eine Grundplatte 52, ein beweglich auf der Grundplatte 52 angebrachtes Anlagestück 53 und eine federnd gegen das Anlagestück 53 drückende Blattfeder 54. Das Verriegelungselement 51 ist um eine zweite Drehachse 55 in einer zweiten Lagerung 56 drehbar an dem Träger 70, wie in den Figuren 6 bis 10 dargestellt, gelagert. Ebenfalls diesen Darstellungen zu entnehmen ist die Längserstreckung des Verriegelungselementes 51 in Einwärtsrichtung 14. Im Wesentlichen quer zur Einwärtsrichtung 14 ist das Anlagestück 53 linear auf der Grundplatte 52 des Verriegelungselementes 51 verschiebbar gleitgelagert. Die Verriegelungselemente 51 befinden sich beidseitig eines in den Figuren 6 bis 10 dargestellten Kartenaufnahmeschachtes 80, und das Anlagestück 53 wird von der Blattfeder 54 jeweils in Richtung der Mitte eines Aufnahmeschachtes 80 unter Vorspannung gehalten. Die Grundplatte 52 ist mit einer ersten kulissenartigen Führung 57 versehen, welche jeweils mit einem der beiden zweiten Zapfen 44 des Getriebeelementes 40 zusammenwirkt. Das Arretierelement 61 ist in Längsrichtung des Verriegelungselementes 51 linear gleitgelagert und ist zu dem Verriegelungselement 51 verschiebbar ausgebildet. An dem eingangsseitigen Ende ist das Arretierelement 61 mit einer Verjüngung 62 versehen, die hinter eine nicht näher dargestellte Ausnehmung 58 des Anlagestückes 53 zur Arretierung des Anlagestückes 53 in einer Arretiert-Stellung einfährt, so dass das Anlagestück 53 in der Beweglichkeit relativ zu dem Verriegelungselement 51 eingeschränkt ist. Das Anlagestück 53 weist einen Vorsprung 59 auf, welcher mit dem ersten Sensor 21, der als Gabellichtschranke ausgebildet ist, zur Erfassung der Verriegelt-Stellung zusammenwirkt. Das Arretierelement 61 weist einen dritten Zapfen 65 auf, mittels dessen im Zusammenwirken mit dem Mitnehmer 45 des Getriebeelementes 40 das Arretierelement 61 in die Arretiert-Stellung an dem Verriegelungselement 51 verschoben wird.

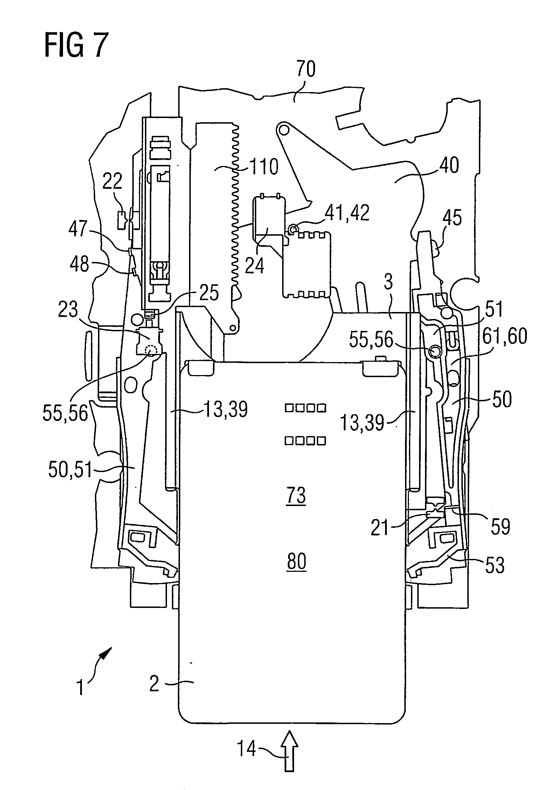

In Figur 6 befindet sich eine Karte 2 vor einer erfindungsgemäßen Kartenaufnahmevorrichtung 1, welche zur Aufnahme der Karte 2 bereit ist. Die Verriegelungselemente 51 sind vollständig geöffnet und der an einer einstückig mit dem Träger 70 ausgebildeten zweiten Blattfeder 71 angebrachte Verschluss 72 ist quer zu einer Einschubebene 73 der Karte 2 von den Verriegelungselementen 51 ungehindert frei beweglich. Während der in Figur 7 dargestellten Momentaufnahme einer Transportphase der Karte 2 in die Kartenaufnahmevorrichtung 1 ist der dritte Sensor 23 bereits mit Eingabe der Karte 2 von dem Vorsprung 25 der Kartenaufnahmeeinheit 3 entlastet worden, und die Energieversorgung eines nicht dargestellten Antriebes der Vorrichtung wurde eingeschaltet. Die Karte 2 ist mittels einer nicht näher dargestellten Klemmeinheit der Kartenaufnahmeeinheit 3 an der Kartenaufnahmeeinheit 3 fixiert, während diese entlang der Gleitlagerflächen 39 der ersten Lagerung 13 in die Kartenaufnahmevorrichtung 1 hineintransportiert wird.

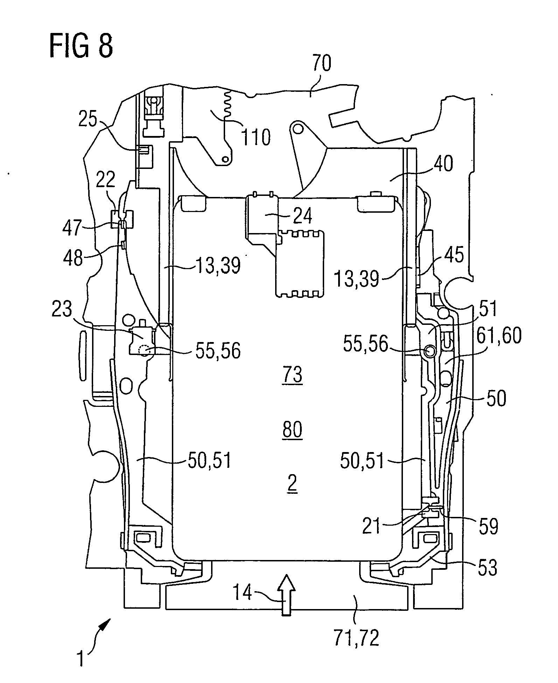

Vor der in Figur 8 dargestellten Feinpositionierphase wurde die nicht näher dargestellte Klemmeinheit der Kartenaufnahmeeinheit 3 gelöst, so dass die Karte 2 nun beweglich auf dem Schlitten 36 aufliegt. Im gleichen Zuge werden die Verriegelungselemente 51 mittels ihrer ersten Führungen 57 von dem sich um die erste Drehachse 41 drehenden Getriebeelement 40 im Zusammenwirken mit dem zweiten Zapfen 44 spiegelbildlich in Richtung der Mitte des Aufnahmeschachtes 80 im Rahmen einer Drehbewegung um die zweite Drehachse 55 aufeinander zu bewegt, so dass die lichte Weite einer nicht näher dargestellten Aufnahmeöffnung der Kartenaufnahmevorrichtung 1 unter die stirnseitigen Abmessungen der Karte 2 reduziert wird. Gleichzeitig erfasst der als Gabellichtschranke ausgebildete erste Sensor 21 das Einrücken der Verriegelungselemente 51 mittels des Vorsprungs 59 und signalisiert nach erfolgter Verriegelung bzw. Feinpositionierung der Karte 2 den erfolgreichen Abschluss dieser Phase der nicht dargestellten zentralen Steuerung. Mit Erreichen der Endposition wird der vierte Sensor 24 an dem Kontaktsatz 10 betätigt, welcher der zentralen Steuerung die Bereitschaft zur Datenübertragung signalisiert.

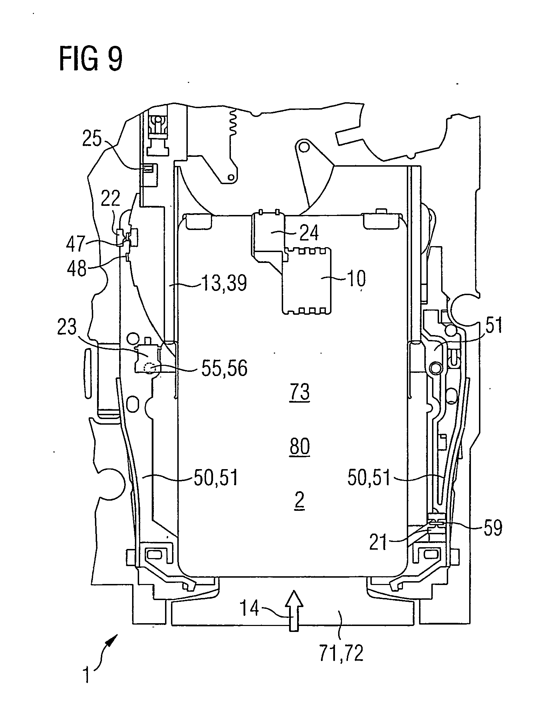

Während der in Figur 9 dargestellten Sicherungsphase schiebt das zentrale Getriebeelement 40 mittels des Mitnehmers 45 im Zusammenwirken mit dem dritten Zapfen 65 das Arretierelement 61 der Arretiereinheit 60 in die Arretiert-Stellung, in welcher das arretierte Anlagestück 53 in seiner Beweglichkeit quer zur Einwärtsrichtung 14 eingeschränkt ist. Der zentralen Steuerung wird der Beginn der Sicherungsphase mittels des zweiten Sensors 22 signalisiert, welcher als Gabellichtschranke ausgebildet ist und den ersten Vorsprung 47 des Getriebeelementes 40 erfasst.

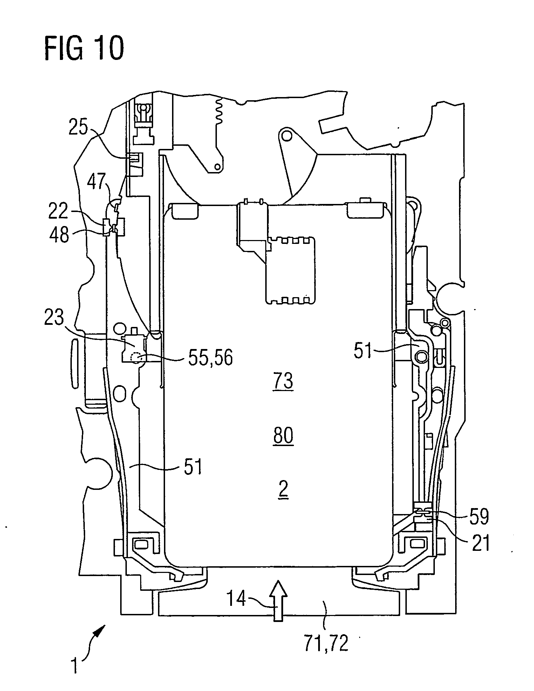

Während des weiteren in den Figuren 9 und 10 dargestellten Verlaufs der Sicherungsphase wird das Arretierelement 61 in die Arretiert-Stellung entlang des Verriegelungselementes 51 verschoben, und gegen Ende der Sicherungsphase erfasst der zweite Sensor 22 den zweiten Vorsprung 48 des Getriebeelementes 40 und signalisiert der zentralen Steuerung das Ende der Sicherungsphase. Daraufhin schaltet die zentrale Steuerung die Energieversorgung des nicht dargestellten Antriebes ab und ein Informationsaustausch zwischen dem Speicher der Karte 2 und dem Fahrtenschreiber erfolgt während der anschlie-ßenden Datenübertragungsphase.

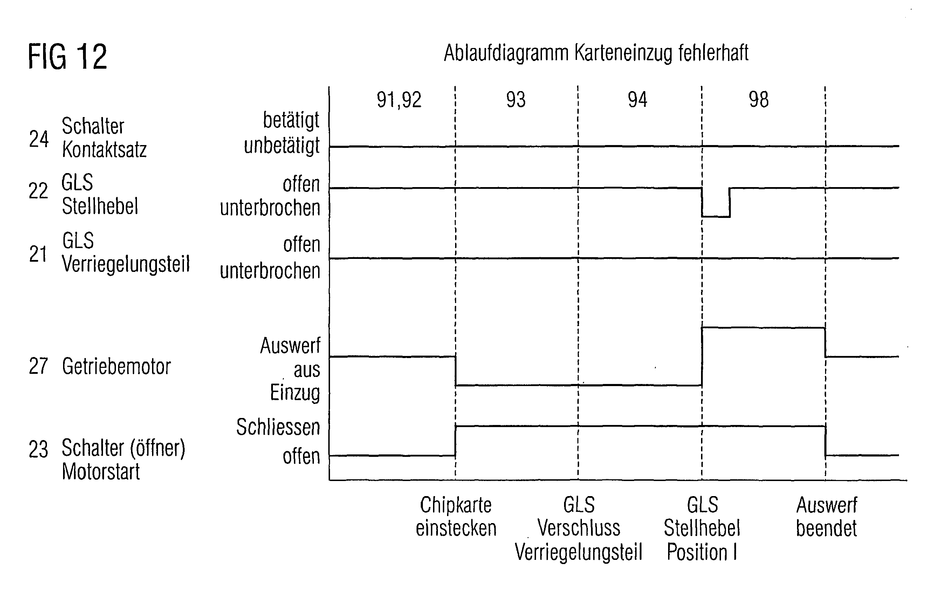

In dem in Figur 12 dargestellten Ablaufdiagramm sind die Signale des ersten bis vierten Sensors 21, 22, 23, 24 während eines normal verlaufenden Karteneinzugs und die Energieversorgung des Antriebes 27 in Abhängigkeit von der Phase der Aufnahme der Karte 2 dargestellt. Während der Eingabephase 91, der Greifphase 92 wird die Karte von dem Benutzer händisch in die Kartenaufnahmevorrichtung 1 eingeschoben und mittels einer nicht dargestellten Klemmeinheit der Kartenaufnahmeeinheit 3 erfasst. Die Bewegung der Kartenaufnahmeeinheit 3 in Einwärtsrichtung 14 bewirkt ein Einschalten der Energieversorgung des Antriebes 27 mittels des dritten Sensors 23 und während der anschließenden Transportphase 93 bewegt sich die geklemmte Karte 2 mit der Kartenaufnahmeeinheit 3 in Einwärtsrichtung 14. Während der sich anschließenden Vorpositionierphase 94 wird die Klemmung der nicht dargestellten Klemmeinheit und somit die Fixierung der Karte 2 an der Kartenaufnahmeeinheit 3 gelöst, so dass die Karte 2 zu dem Schlitten 36 beweglich ist. Während der sich anschließenden Feinpositionierphase 95 bewegen sich die Verriegelungselemente 51 der Verriegelungseinheit 50 in eine Verriegelt-Stellung, in welcher der Verschluss 72 der Kartenaufnahmevorrichtung 1 verriegelt ist. Gleichzeitig wird die Karte 2 mittels der Anlagestücke 53 in eine für die Datenübertragung geeignete Endposition transportiert, in welcher erste Kontakte 11 des Kontaktsatzes 10 mit zweiten Kontakten der Karte 2 in Verbindung stehen. Der erste Sensor 21 erfasst die Verriegelt-Stellung der Verriegelungseinheit und sendet dieses Signal an die zentrale Steuerung, bzw. die zentrale Steuerung registriert.die Unterbrechung der Gabellichtschranke des ersten Sensors 21.

Während einer sich anschließenden Sicherungsphase 96 bewegt sich ein Arretierelement 61 einer Arretiereinheit 60 in eine Arretiert-Stellung, in welcher die Verriegelungseinheit 50 arretiert ist, zu dessen Beginn der zweite Sensor 22 das Vorbeistreichen des ersten Vorsprungs 47 des Getriebeelementes 40 erfasst und der zentralen Steuerung signalisiert. Das im weiteren Verlauf der Sicherungsphase 96 auf Grund des Vorbeistreichens des zweiten Vorsprungs 48 an dem zweiten Sensor 22 verursachte Signal zeigt der zentralen Steuerung das Ende der Sicherungsphase 96 an und der Antrieb 27 wird abgeschaltet.

Wenn der Zeitraum zwischen den beiden aufeinander folgenden Signalen des zweiten Sensors 22 einen gewissen Wert überschreiten, tritt der in Figur 12 dargestellte Fall eines fehlerhaften Karteneinzugs ein, und die zentrale Steuerung leitet den Auswurf 98 der Karte 2 ein.

Bei fehlerfreiem Ablauf schließt sich an die Sicherungsphase 96 eine Datenübertragungsphase 97 an, während welcher Informationen zwischen dem Speicher der Karte 2 und der Kartenaufnahmevorrichtung 1 übertragen werden. Während der gesamten Datenübertragung werden die Arretiert-Stellung mittels des zweiten Sensors 22 und die Verriegelt-Stellung mittels des ersten Sensors 21 überwacht.

## Patentansprüche

1. Kartenaufnahmevorrichtung (1), insbesondere für einen Fahrtenschreiber in einem Kraftfahrzeug in Flachbauweise, mit einer Aufnahmeöffnung zur Aufnahme einer Karte (2), welche einen Speicher für Daten aufweist, mit einem Verschluss (72) zum Verschließen der Aufnahmeöffnung, mit einer Verriegelungseinheit (50), welche mindestens ein Verriegelungselement (51) aufweist, welches in eine Verriegelt-Stellung bewegbar ist, in welcher das mindestens eine Verriegelungselement (51) den Verschluss (72) verriegelt, wobei die Kartenaufnahmevorrichtung (1) mindestens einen ersten Sensor (21)aufweist und die Stellung des mindestens einen Verriegelungselments (51) mittels des ersten Sensors (21) erfassbar ist, **dadurch gekennzeichnet, dass** die Kartenaufnahmevorrichtung (1) eine Arretiereinheit (60) aufweist, welche in eine Arretiert-Stellung bewegbar ist und in der Arretiert-Stellung die in der Verriegelt-Stellung befindliche Verriegelungseinheit (50) arretiert.

2. Kartenaufnahmevorrichtung (1) nach Anspruch 1, **dadurch gekennzeichnet, dass** die Kartenaufnahmevorrichtung (1) eine zentrale Steuerung aufweist, welche mit dem ersten Sensor (21) in Verbindung steht.

3. Kartenaufnahmevorrichtung (1) nach Anspruch 1 und 2, **dadurch gekennzeichnet, dass** die Kartenaufnahmevorrichtung (1) mindestens einen zweiten Sensor (22) aufweist, der zweite Sensor (22) mindestens eine Phase der Aufnahme der Karte (2) erfasst und zu Beginn und/oder zum Ende der Phase mindestens ein Signal an eine zentrale Steuerung sendet.

4. Kartenaufnahmevorrichtung (1) nach Anspruch 3, **dadurch gekennzeichnet, dass** der zweite Sensor (22) den Beginn oder das Ende der Arretierung der Verriegelungseinheit (50) in der Verriegelt-Stellung der Karte (2) erfasst und zu Beginn und/oder zum Ende der Arretierung der Verriegelungseinheit (50) mindestens ein Signal an die zentrale Steuerung sendet.

5. Kartenaufnahmevorrichtung (1) nach Anspruch 4, **dadurch gekennzeichnet, dass** die zentrale Steuerung einen Datenübertragungsvorgang zu der aufzunehmenden Karte (2) nur dann einleitet und/oder aufrechterhält, wenn der erste Sensor (21) signalisiert, dass das mindestens eine Verriegelungselement (51) in der Verriegelt-Stellung ist und der zweite Sensor (22) signalisiert, dass die Arretiereinheit (60) in der Arretiert-Stellung ist.

6. Kartenaufnahmevorrichtung (1) nach mindestens einem der vorhergehenden Ansprüche, **dadurch gekennzeichnet, dass** die Aufnahme der Karte (2) den Einzug der Karte (2), die Verriegelung des Verschlusses (72) mittels des mindestens einen Verriegelungselementes (51) und die Arretierung der Verriegelungseinheit (50) mittels einer Arretiereinheit (60) umfasst.

7. Kartenaufnahmevorrichtung (1) nach mindestens einem der vorhergehenden Ansprüche, **dadurch gekennzeichnet, dass** die Kartenaufnahmevorrichtung (1) mindestens ein bewegliches Getriebeelement (40) aufweist, welches in der Weise ausgebildet und in die Kinetik der Kartenaufnahmevorrichtung (1) eingekoppelt ist, dass jeder Stellung diese Getriebeelements (40) während des Transports der Karte (2) in eine Endstellung eindeutig eine Bewegungsphase des Einzugs, der Verriegelung und/oder der Arretierung der Verriegelung zuordenbar ist.

8. Kartenaufnahmevorrichtung (1) nach Anspruch 7, **dadurch gekennzeichnet, dass** der zweite Sensor (22) an das Getriebeelement (40) sensorisch angekoppelt ist, mindestens eine Stellung des Getriebeelements (40) mittels des Sensors (22) erfassbar ist, und auf diese Weise der Beginn und/oder das Ende der Bewegungsphase mittels der kinetischen Zuordnung erfassbar ist.

9. Kartenaufnahmevorrichtung (1) nach mindestens einem der vorhergehenden Ansprüche, **dadurch gekennzeichnet, dass** mittels des ersten Sensors (21) und/oder des zweiten Sensors (22) die Stellung optisch und/oder induktiv und/oder kapazitiv und/oder mechanisch erfassbar ist.

10. Kartenaufnahmevorrichtung (1) nach mindestens einem der vorhergehenden Ansprüche, **dadurch gekennzeichnet, dass** die Karte (2) vollständig ins Innere der Kartenaufnahmevorrichtung (1) einziehbar ist.

11. Kartenaufnahmevorrichtung (1) nach mindestens einem der vorhergehenden Ansprüche, **dadurch gekennzeichnet, dass** das mindestens eine Verriegelungselement (51) in der Verriegelt-Stellung zumindest teilweise den lichten Querschnitt der Aufnahmeöffnung versperrt.

12. Kartenaufnahmevorrichtung (1) nach mindestens einem der vorhergehenden Ansprüche, **dadurch gekennzeichnet, dass** die Stellung des mindestens einen Verriegelungselements (51) in der Verriegelt-Stellung permanent mittels des ersten Sensors (21) abfragbar ist und der erste Sensor (21) mittels an die zentrale Steuerung übersendeter Signale der zentralen Steuerung permanent die erfasste Stellung meldet.

13. Kartenaufnahmevorrichtung (1) nach mindestens einem der vorhergehenden Ansprüche, **dadurch gekennzeichnet, dass** die Kartenaufnahmevorrichtung (1) einen dritten Sensor (23) aufweist, welcher die Anwesenheit der aufzunehmenden Karte (2) in der Vorrichtung (1) erfasst.

14. Kartenaufnahmevorrichtung (1) nach Anspruch 13, **dadurch gekennzeichnet, dass** der dritte Sensor (23) von der aufzunehmenden Karte (2) oder von einer in Einwärtsrichtung bewegbaren Kartenaufnahmeeinheit (3) betätigbar ausgebildet ist.

15. Kartenaufnahmevorrichtung (1) nach Anspruch 13 oder 14, **dadurch gekennzeichnet, dass** der dritte Sensor (23) mechanisch betätigbar ausgebildet ist.

16. Kartenaufnahmevorrichtung (1) nach mindestens einem der Ansprüche 13 bis 15, **dadurch gekennzeichnet, dass** mit Betätigung des dritten Sensors (23) die Energieversorgung der Kartenaufnahmevorrichtung (1) eingeschaltet wird.

17. Kartenaufnahmevorrichtung (1) nach mindestens einem der Ansprüche 13 bis 16, **dadurch gekennzeichnet, dass** der dritte Sensor (23) als Öffner und von einer mit der Karte (2) sich in Einwärtsrichtung bewegenden Kartenaufnahmeeinheit (3) betätigbar ausgebildet ist, so dass er, wenn sich keine Karte (2) in der Kartenaufnahmevorrichtung (1) befindet, betätigt wird und ein Schalter geöffnet ist, bei einer Einwärtsbewegung der Kartenaufnahmevorrichtung (1) nicht mehr betätigt wird und der Schalter in die Geschlossen-Stellung wechselt.

18. Kartenaufnahmevorrichtung (1) nach mindestens einem der vorhergehenden Ansprüche, **dadurch gekennzeichnet, dass** einige Module der Kartenaufnahmevorrichtung (1) von der Energieversorgung trennbar sind und nach einer bestimmten Zeit der Nichtbenutzung von der Energieversorgung getrennt werden.

19. Kartenaufnahmevorrichtung (1) nach mindestens einem der vorhergehenden Ansprüche, **dadurch gekennzeichnet, dass** die Kartenaufnahmevorrichtung (1) einen vierten Sensor (24) aufweist, mittels welchem erfassbar ist, ob die Karte (2) die Endstellung in der Kartenaufnahmevorrichtung (1) erreicht hat.

20. Kartenaufnahmevorrichtung (1) nach mindestens einem der vorhergehenden Ansprüche, **dadurch gekennzeichnet, dass** die Karte (2) automatisch einziehbar und/oder ausgebbar ist.

21. Verfahren zur Aufnahme einer Karte (2) mittels einer Kartenaufnahmevorrichtung (1) nach Anspruch 1, **dadurch gekennzeichnet, dass**
- während einer Eingabephase die Karte (2) in die Kartenaufnahmevorrichtung (1) eingegeben wird,
- nach der Eingabephase das mindestens eine Verriegelungselement (51) sich in eine Verriegelt-Stellung bewegt, in welcher der Verschluss (72) der Aufnahmeöffnung für die Karte (2) mittels des mindestens einen Verriegelungselements (51) verriegelt ist, der erste Sensor (21) die Verriegelt-Stellung des mindestens einen Verriegelungselementes (51) erfasst und
- während einer Sicherungsphase (96) eine Arretiereinheit (60) in eine Arretiert-Stellung bewegt wird, in welcher die Verriegelungseinheit (50) mittels der Arretiereinheit (60) arretiert ist.

22. Verfahren nach Anspruch 21, **dadurch gekennzeichnet, dass**
- während der Eingabephase die Karte (2) in die Kartenaufnahmevorrichtung (1) eingegeben wird,
- der erste Sensor (21) die Verriegelt-Stellung des mindestens einen Verriegelungselementes (51) erfasst und an eine zentrale Steuerung signalisiert,
- ein dritter Sensor (23) die Eingabe der Karte (2) erfasst und an die zentrale Steuerung signalisiert und
- die zentrale Steuerung die Energieversorgung eines Antriebs einschaltet.

23. Verfahren nach mindestens einem der vorhergehenden Ansprüche 21 und 22, **dadurch gekennzeichnet, dass**
- nach der Eingabephase während einer Greifphase (92) eine Klemmeinheit die Karte (2) klemmt,
- während einer Transportphase (93) die Karte (2) in die Kartenaufnahmevorrichtung (1) transportiert wird.

24. Verfahren nach mindestens einem der vorhergehenden Ansprüche 21 bis 23, **dadurch gekennzeichnet, dass**
- nach der Eingabephase, Transportphase (93) und/oder Greifphase (92) während einer Vorpositionierphase (94) die Klemmung der Klemmeinheit von der Karte (2) gelöst wird,
- ein zweiter Sensor (22) das Ende der Vorpositionierphase (94) erfasst und an die zentrale Steuerung signalisiert.

25. Verfahren nach mindestens einem der vorhergehenden Ansprüche 21 bis 24, **dadurch gekennzeichnet, dass**
- nach der Eingabephase, Transportphase (93), Greifphase (92) und/oder Vorpositionierphase (94) während einer Feinpositionierphase (95) die Verriegelungseinheit (50) sich in eine Verriegelt-Stellung bewegt, in welcher der Verschluss (72) der Aufnahmeöffnung für die Karte (2) mittels des mindestens einen Verriegelungselementes (51) verriegelt ist, die Karte (2) dabei in eine Endposition transportiert, in welcher erste Kontakte (11) eines Kontaktsatzes (10) mit zweiten Kontakten (11) der Karte (2) in Verbindung stehen,
- der erste Sensor (21) die Verriegelt-Stellung der Verriegelungseinheit (50) erfasst und an die zentrale Steuerung signalisiert,
- ein vierter Sensor (24) die Endposition der Karte (2) erfasst und an die zentrale Steuerung signalisiert.

26. Verfahren nach mindestens einem der vorhergehenden Ansprüche 21 bis 25, **dadurch gekennzeichnet, dass**
- nach der Eingabephase, Transportphase (93), Greifphase (92), Vorpositionierphase (94) und/oder Feinpositionierphase (95) während der Sicherungsphase (96) die Arretiereinheit (60) in die Arretiert-Stellung bewegt wird, in welcher die Verriegelungseinheit (50) mittels der Arretiereinheit (60) arretiert ist,
- der zweite Sensor (22) die Arretiert-Stellung der Arretiereinheit (60) erfasst, an die zentrale Steuerung signalisiert
- und die zentrale Steuerung den Antrieb abschaltet,
- wenn der Zeitraum zwischen dem Signal, welches das Ende der Vorpositionierphase (94) signalisiert und dem Signal, welches das Erreichen der Verriegelt-Stellung des mindestens einen Verriegelungselementes (51) signalisiert, einen bestimmten Wert nicht überschreitet,
- sonst die zentrale Steuerung einen Vorgang zur Ausgabe der Karte (2) einleitet.

27. Verfahren nach mindestens einem der vorhergehenden Ansprüche 21 bis 26, **dadurch gekennzeichnet, dass**
- nach der Eingabephase, Transportphase (93), Greifphase (92), Vorpositionierphase (94), Feinpositionierphase (95) und/oder Sicherungsphase (96) während einer Datenübertragungsphase (97) Informationen zwischen dem Speicher der Karte (2) und der Kartenaufnahmevorrichtung (1) übertragen werden, wenn der zweite Sensor (22) die Arretiert-Stellung der Arretiereinheit (60) signalisiert und der erste Sensor (21) die Verriegelt-Stellung signalisiert.

28. Verfahren zur Aufnahme einer Karte (2) mittels einer Kartenaufnahmevorrichtung (1) nach mindestens einem der vorhergehenden Ansprüche 1 bis 20, **dadurch gekennzeichnet, dass**
- während einer Eingabephase die Karte (2) in die Kartenaufnahmevorrichtung (1) eingegeben wird,
- ein dritter Sensor (23) die Eingabe der Karte (2) erfasst, die Eingabe an eine zentrale Steuerung signalisiert und die zentrale Steuerung die Energieversorgung eines Antriebs einschaltet,
- während einer Greifphase (92) eine Klemmeinheit die Karte (2) klemmt,
- während einer Transportphase (93) die Karte (2) in die Kartenaufnahmevorrichtung (1) transportiert wird,
- während einer Vorpositionierphase (94) die Klemmung der Klemmeinheit von der Karte (2) gelöst wird,
- während einer Feinpositionierphase (95) mindestens ein Verriegelungselement (51) einer Verriegelungseinheit (50) sich in eine Verriegelt-Stellung bewegt, in welcher ein Verschluss (72) einer Aufnahmeöffnung für die Karte (2) mittels des mindestens einen Verriegelungselementes (51) verriegelt ist,
- die Karte (2) dabei in eine Endposition transportiert,
- ein erster Sensor (21) die Verriegelt-Stellung des mindestens einen Verriegelungelementes (51) erfasst und an die zentrale Steuerung signalisiert,
- ein vierter Sensor (24) die Endposition der Karte (2) erfasst und an die zentrale Steuerung signalisiert,
- während einer Sicherungsphase (96) eine Arretiereinheit (60) in eine Arretiert-Stellung bewegt wird, in welcher die Verriegelungseinheit (50) mittels der Arretiereinheit (60) arretiert ist,
- der zweite Sensor (22) die Arretiert-Stellung der Arretiereinheit (60) erfasst, an die zentrale Steuerung signalisiert und
- die zentrale Steuerung den Antrieb abschaltet, wenn der Zeitraum zwischen dem Signal, welches das Ende der Vorpositionierphase (94) signalisiert und dem Signal, welches das Erreichen der Verriegelt-Stellung des mindestens einen Verriegelungselementes (51) signalisiert, einen bestimmten Wert nicht überschreitet, sonst die zentrale Steuerung einen Vorgang zur Ausgabe der Karte (2) einleitet,
- während einer Datenübertragungsphase (97) Informationen zwischen dem Speicher der Karte (2) und der Kartenaufnahmevorrichtung (1) übertragen werden, wenn der zweite Sensor (22) die Arretiert-Stellung der Arretiereinheit (60) signalisiert und der erste Sensor (21) die Verriegelt-Stellung signalisiert.

## Claims

1. Card receiving device (1), in particular for a tachograph in a motor vehicle of a flat construction, with a receiving opening for receiving a card (2), which has a memory for data, with a closure (72) for closing the receiving opening, with a locking unit (50), which has at least one locking element (51), which can be moved into a locked position in which the at least one locking element (51) locks the closure (72), the card receiving device (1) having at least one first sensor (21) and it being possible for the position of the at least one locking element (51) to be sensed by means of the first sensor (21), **characterized in that** the card receiving device (1) has an arresting unit (60), which can be moved into an arrested position and, in the arrested position, arrests the locking unit (50) located in the locked position.

2. Card receiving device (1) according to Claim 1, **characterized in that** the card receiving device (1) has a central control system, which is in connection with the first sensor (21).

3. Card receiving device (1) according to Claims 1 and 2, **characterized in that** the card receiving device (1) has at least one second sensor (22), the second sensor (22) senses at least one phase of the reception of the card (2) and, at the beginning and/or end of the phase, sends at least one signal to the central control system.

4. Card receiving device (1) according to Claim 3, **characterized in that** the second sensor (22) senses the beginning or the end of the arrestment of the locking unit (50) in the locked position of the card (2) and sends at least one signal to the central control system at the beginning and/or the end of the arrestment of the locking unit (50).

5. Card receiving device (1) according to Claim 4, **characterized in that** the central control system initiates a data transmission operation to the card (2) to be received, or maintains it, only if the first sensor (21) signals that the at least one locking element (51) is in the locked position and the second sensor (22) signals that the arresting unit (60) is in the arrested position.

6. Card receiving device (1) according to at least one of the preceding claims, **characterized in that** the reception of the card (2) comprises the drawing-in of the card (2), the locking of a closure (72) by means of the at least one locking element (51) and the arrestment of the locking unit (50) by means of an arresting unit (60).

7. Card receiving device (1) according to at least one of the preceding claims, **characterized in that** the card receiving device (1) has at least one movable gear element (40), which is formed and coupled into the kinetic mechanism of the card receiving device (1) in such a way that each position of this gear element (40) during the transport of the card (2) into an end position can be uniquely assigned a movement phase of the drawing-in, locking and/or arrestment of the locking.

8. Card receiving device (1) according to Claim 7, **characterized in that** the second sensor (22) is coupled to the gear element (40) in a sensory manner, at least one position of the gear element (40) can be sensed by means of the sensor (22), and in this way the beginning and/or the end of the movement phase can be sensed by means of the kinetic assignment.

9. Card receiving device (1) according to at least one of the preceding claims, **characterized in that** the position can be sensed by means of the first sensor (21) and/or the second sensor (22) optically and/or inductively and/or capacitively and/or mechanically.

10. Card receiving device (1) according to at least one of the preceding claims, **characterized in that** the card (2) can be drawn completely into the interior of the card receiving device (1).

11. Card receiving device (1) according to at least one of the preceding claims, **characterized in that** the at least one locking element (51) at least partially blocks the clear cross section of the receiving opening in the locked position.

12. Card receiving device (1) according to at least one of the preceding claims, **characterized in that** the position of the at least one locking element (51) in the locked position can be permanently inquired by means of the first sensor (21) and the first sensor (21) permanently signals the sensed position to the central control system by means of signals transmitted to the central control system.

13. Card receiving device (1) according to at least one of the preceding claims, **characterized in that** the card receiving device (1) has a third sensor (23), which senses the presence in the device (1) of the card (2) to be received.

14. Card receiving device (1) according to Claim 13, **characterized in that** the third sensor (23) is formed in such a way that it can be actuated by the card (2) to be received or by a card receiving unit (3) that is movable in the inward direction.

15. Card receiving device (1) according to Claim 13 or 14, **characterized in that** the third sensor (23) is formed in such a way that it can be actuated mechanically.

16. Card receiving device (1) according to at least one of Claims 13 to 15, **characterized in that** actuation of the third sensor (23) has the effect that the power supply to the card receiving device (1) is switched on.

17. Card receiving device (1) according to at least one of Claims 13 to 16, **characterized in that** the third sensor (23) is formed as a normally closed contact and in such a way that it can be actuated by a card receiving unit (3) that moves with the card (2) in the inward direction, so that, if there is no card (2) in the card receiving device (1), it is actuated and a switch is open, if there is a drawing-in movement of the card receiving device (1), it is no longer actuated and the switch changes into the closed position.

18. Card receiving device (1) according to at least one of the preceding claims, **characterized in that** some modules of the card receiving device (1) can be disconnected from the power supply and are disconnected from the power supply after not being in use for a certain time.

19. Card receiving device (1) according to at least one of the preceding claims, **characterized in that** the card receiving device (1) has a fourth sensor (24), by means of which it can be sensed whether the card (2) has reached the end position in the card receiving device (1).

20. Card receiving device (1) according to at least one of the preceding claims, **characterized in that** the card (2) can be automatically drawn in and/or withdrawn.

21. Method for receiving a card (2) by means of a card receiving device (1) according to Claim 1, **characterized in that**
- during an insertion phase, the card (2) is inserted into the card receiving device (1),
- after the insertion phase, the at least one locking element (51) moves into a locked position, in which the closure (72) of the receiving opening for the card (2) is locked by means of the at least one locking element (51), the first sensor (21) senses the locked position of the at least one locking element (51) and,
- during a securing phase (96), an arresting unit (60) is moved into an arrested position, in which the locking unit (50) is arrested by means of the arresting unit (60).

22. Method according to Claim 21, **characterized in that**
- during the insertion phase, the card (2) is inserted into the card receiving device (1),
- the first sensor (21) senses the locked position of the at least one locking element (51) and signals it to a central control system,
- a third sensor (23) senses the insertion of the card (2) and signals it to a central control system and
- the central control system switches on the power supply to a drive.

23. Method according to at least one of the preceding Claims 21 and 22, **characterized in that**
- after the insertion phase, a clamping unit clamps the card (2) during a gripping phase (92),
- the card (2) is transported into the card receiving device (1) during a transporting phase (93).

24. Method according to at least one of the preceding Claims 21 to 23, **characterized in that**
- after the insertion phase, transporting phase (93) and/or gripping phase (92), the clamping of the clamping unit is released from the card (2) during a prepositioning phase (94),
- a second sensor (22) senses the end of the prepositioning phase (94) and signals it to the central control system.

25. Method according to at least one of the preceding Claims 21 to 24, **characterized in that**
- after the insertion phase, transporting phase (93), gripping phase (92) and/or prepositioning phase (94), the locking unit (50) moves into a locked position during a fine positioning phase, in which position the closure (72) of the receiving opening for the card (2) is locked by means of the at least one locking element (51), the card (2) is thereby transported into an end position, in which first contacts (11) of a set of contacts (10) are in connection with second contacts (11) of the card (2),
- the first sensor (21) senses the locked position of the locking unit (50) and signals it to the central control system,
- a fourth sensor (24) senses the end position of the card (2) and signals it to the central control system.

26. Method according to at least one of the preceding Claims 21 to 25, **characterized in that**
- after the insertion phase, transporting phase (93), gripping phase (92), prepositioning phase (94) and/or fine positioning phase (95), the arresting unit (60) is moved into the arrested position during the securing phase (96), in which position the locking unit (50) is arrested by means of the arresting unit (60),
- the second sensor (22) senses the arrested position of the arresting unit (60), signals it to the central control system
- and the central control system switches off the drive,
- if the time period between the signal which signals the end of the prepositioning phase (94) and the signal which signals the reaching of the locked position of the at least one locking element (51) does not exceed a certain value,
- otherwise the central control system initiates an operation for the card (2) to be withdrawn.

27. Method according to at least one of the preceding Claims 21 to 26, **characterized in that**
- after the insertion phase, transporting phase (93), gripping phase (92), prepositioning phase (94), fine positioning phase (95) and/or securing phase (96), information is transmitted between the memory of the card (2) and the card receiving device (1) during a data transmission phase (97) if the second sensor (22) signals the arrested position of the arresting unit (60) and the first sensor (21) signals the locked position.

28. Method for receiving a card (2) by means of a card receiving device (1) according to at least one of the preceding Claims 1 to 20, **characterized in that**
- during an insertion phase, the card (2) is inserted into the card receiving device (1),
- a third sensor (23) senses the insertion of the card (2), signals the insertion to a central control system and the central control system switches on the power supply to a drive,
- during a gripping phase (92), a clamping unit clamps the card (2),
- during a transporting phase (93), the card (2) is transported into the card receiving device (1),
- during a prepositioning phase (94), the clamping of the clamping unit is released from the card (2),
- during a fine positioning phase (95), at least one locking element (51) of a locking unit (50) moves into a locked position, in which a closure (72) of a receiving opening for the card (2) is locked by means of the at least one locking element (51),
- the card (2) is thereby transported into an end position,
- a first sensor (21) senses the locked position of the at least one locking element (51) and signals it to the central control system,
- a fourth sensor (24) senses the end position of the card (2) and signals it to the central control system,
- during a securing phase (96), an arresting unit (60) is moved into an arrested position, in which the locking unit (50) is arrested by means of the arresting unit (60),
- the second sensor (22) senses the arrested position of the arresting unit (60), signals it to the central control system and
- the central control system switches off the drive, if the time period between the signal which signals the end of the prepositioning phase (94) and the signal which signals the reaching of the locked position of the at least one locking element (51) does not exceed a certain value, otherwise the central control system initiates an operation for the card (2) to be withdrawn,
- during a data transmission phase (97), information is transmitted between the memory of the card (2) and the data receiving device (1) if the second sensor (22) signals the arrested position of the arresting unit (60) and the first sensor (21) signals the locked position.

## Revendications

1. Dispositif de réception de cartes à puce (1), destiné notamment à un tachygraphe du type plat dans un véhicule automobile, comportant une ouverture d'introduction destinée à introduire une carte à puce (2), laquelle comporte une mémoire pour des données, un obturateur (72) permettant d'obturer l'ouverture d'introduction, une unité de verrouillage (50), laquelle comporte au moins un organe de verrouillage (51) pouvant se déplacer dans une position verrouillée dans laquelle le au moins un organe de verrouillage (51) verrouille l'obturateur (72), où le dispositif de réception de cartes à puce (1) comporte au moins un premier capteur (21) et où la position du au moins un organe de verrouillage (51) peut être détectée au moyen du premier capteur (21), **caractérisé par le fait que** le dispositif de réception de cartes à puce (1) comporte une unité de blocage (60), qui peut être déplacée dans une position de blocage, et que, dans la position de blocage, l'unité de verrouillage (50), qui se trouve dans la position verrouillée, est bloquée.

2. Dispositif de réception de cartes à puce (1) selon la revendication 1, **caractérisé par le fait que** le dispositif de réception de cartes à puce (1) comporte une commande centralisée qui est en liaison avec le premier capteur (21).

3. Dispositif de réception de cartes à puce (1) selon la revendication 1 et 2, **caractérisé par le fait que** le dispositif de réception de cartes à puce (1) comporte au moins un deuxième capteur (22), que le deuxième capteur (22) détecte au moins une phase de réception de la carte (2) et envoie au début et/ou à la fin de la phase au moins un signal à une commande centralisée.

4. Dispositif de réception de cartes à puce (1) selon la revendication 3, **caractérisé par le fait que** le deuxième capteur (22) détecte le début ou la fin du blocage de l'unité de blocage (50) dans la position de blocage de la carte (2) et, au début et / ou à la fin du blocage de l'unité de blocage (50), envoie au moins un signal à la commande centralisée.

5. Dispositif de réception de cartes à puce (1) selon la revendication 4, **caractérisé par le fait que** la commande centralisée n'initie et/ou ne maintient une opération de transmission de données vers la carte à réceptionner (2) que si le premier capteur (21) signale que le au moins un organe de verrouillage (51) se trouve dans la position de verrouillage et si le deuxième capteur (22) signale que l'unité de blocage (60) se trouve dans la position de blocage.

6. Dispositif de réception de cartes à puce (1) selon au moins l'une des revendications précédentes, **caractérisé par le fait que** la réception de la carte (2) comprend l'absorption de la carte (2), le verrouillage de l'obturateur (72) au moyen du au moins un organe de verrouillage (51) et le blocage de l'unité de verrouillage (50) au moyen d'une unité de blocage (60).

7. Dispositif de réception de cartes à puce (1) selon au moins l'une des revendications précédentes, **caractérisé par le fait que** le dispositif de réception de cartes à puce (1) comporte au moins un organe mobile de commande (40), qui est conçu et est intégré dans la cinétique du dispositif de réception de cartes à puce (1) de manière telle qu'une phase de déplacement de l'absorption, du verrouillage et / ou du blocage du verrouillage peut être affectée d'une façon univoque à chaque position de cet organe mobile de commande (40) pendant le transport de la carte (2) dans une position finale.

8. Dispositif de réception de cartes à puce (1) selon la revendication 7, **caractérisé par le fait que** le deuxième capteur (22) est couplé en technologie sensorielle à l'organe de commande (40), que au moins une position de l'organe de commande (40) peut être détectée au moyen du capteur (22) et que, de cette façon, le début et/ou la fin de la phase de déplacement peut être détectée au moyen de la concordance cinétique.

9. Dispositif de réception de cartes à puce (1) selon au moins l'une des revendications précédentes, **caractérisé par le fait que**, au moyen du premier capteur (21) et ou du deuxième capteur (22), la position peut être détectée d'une façon optique et/ou inductive et/ou capacitive et/ou mécanique.

10. Dispositif de réception de cartes à puce (1) selon au moins l'une des revendications précédentes, **caractérisé par le fait que** la carte est absorbée entièrement à l'intérieur du dispositif de réception de cartes à puce (1) .

11. Dispositif de réception de cartes à puce (1) selon au moins l'une des revendications précédentes, **caractérisé par le fait que** le au moins un organe de verrouillage (51) bloque, dans la position verrouillée, au moins partiellement la section transversale intérieure de l'ouverture d'introduction.

12. Dispositif de réception de cartes à puce (1) selon au moins l'une des revendications précédentes, **caractérisé par le fait que** la position du au moins un organe de verrouillage (51) est, dans la position verrouillée, en permanence interrogée au moyen du premier capteur (21) et que le premier capteur (21) indique en permanence à la commande centralisée, au moyen de signaux envoyés à la commande centralisée, la position détectée.

13. Dispositif de réception de cartes à puce (1) selon au moins l'une des revendications précédentes, **caractérisé par le fait que** le dispositif de réception de cartes à puce (1) comporte un troisième capteur (23) qui détecte la présence de la carte à réceptionner (2) dans le dispositif (1).

14. Dispositif de réception de cartes à puce (1) selon la revendication 13, **caractérisé par le fait que** le troisième capteur (23) est conçu pour être actionné par la carte à réceptionner (2) ou par une unité de réception de cartes mobile en direction de l'intérieur.

15. Dispositif de réception de cartes à puce (1) selon la revendication 13 ou 14, **caractérisé par le fait que** le troisième capteur (23) est conçu pour être actionné mécaniquement.

16. Dispositif de réception de cartes à puce (1) selon au moins l'une des revendications 13 à 15, **caractérisé par le fait que**, avec l'actionnement du troisième capteur (23), l'alimentation en énergie du dispositif de réception de cartes à puce (1) est mise en circuit.

17. Dispositif de réception de cartes à puce (1) selon au moins l'une des revendications 13 à 16, **caractérisé par le fait que** le troisième capteur (23) est conçu pour être actionné en tant que contacteur à contact repos par une unité de réception de cartes (3) se déplaçant avec la carte (2) en direction de l'intérieur, si bien qu'il est actionné lorsque aucune carte (2) ne se trouve dans le dispositif de réception de cartes à puce (1) et un contacteur est ouvert, qu'il n'est plus actionné lors d'un déplacement vers l'intérieur du dispositif de réception de cartes à puce (1) et le contacteur passe dans la position fermée.

18. Dispositif de réception de cartes à puce (1) selon au moins l'une des revendications précédentes, **caractérisé par le fait que** certains modules du dispositif de réception de cartes à puce (1) peuvent être déconnectés de l'alimentation en énergie et qu'ils sont déconnectés de l'alimentation en énergie lorsqu'ils ne sont pas utilisés pendant un certain temps.

19. Dispositif de réception de cartes à puce (1) selon au moins l'une des revendications précédentes, **caractérisé par le fait que** le dispositif de réception de cartes à puce (1) comporte un quatrième capteur (24) au moyen duquel il est possible de détecter si la carte (2) a atteint sa position finale dans le dispositif de réception de cartes à puce (1).

20. Dispositif de réception de cartes à puce (1) selon au moins l'une des revendications précédentes, **caractérisé par le fait que** la carte (2) est absorbée et / ou rejetée automatiquement.

21. Procédé destiné à la réception d'une carte (2) au moyen d'un dispositif de réception de cartes à puce (1) conforme à la revendication 1, **caractérisé par le fait que**,
- pendant une phase d'introduction, la carte (2) est introduite dans le dispositif de réception de cartes à puce (1),
- après la phase d'introduction, le au moins un organe de verrouillage (51) se déplace dans une position de verrouillage, dans laquelle l'obturateur (72) de l'ouverture d'introduction destinée à la carte (2) est verrouillé au moyen du au moins un organe de verrouillage (51), le premier capteur (21) détecte la position verrouillée du au moins un organe de verrouillage (51) et
- pendant une phase de sécurité (96), une unité de blocage (60) est déplacée dans une position de blocage dans laquelle l'unité de verrouillage (50) est bloquée au moyen de l'unité de blocage (60).

22. Procédé selon la revendication 21, **caractérisé par le fait que**,
- pendant la phase d'introduction, la carte (2) est introduite dans le dispositif de réception de cartes à puce (1),
- le premier capteur (21) détecte la position verrouillée du au moins un organe de verrouillage (51) et la signale à une commande centralisée,
- un troisième capteur (23) détecte l'introduction de la carte (2) et la signale à la commande centralisée et
- la commande centralisée met en circuit l'alimentation en énergie d'un mécanisme d'entraînement.

23. Procédé selon au moins l'une des revendications précédentes 21 et 22, **caractérisé par le fait que**,
- après la phase d'introduction et pendant une phase de saisie (92), une unité de serrage serre la carte (2),
- pendant une phase de transport (93), la carte (2) est transportée dans le dispositif de réception de cartes à puce (1).

24. Procédé selon au moins l'une des revendications précédentes 21 à 23, **caractérisé par le fait que**,
- après la phase d'introduction, la phase de transport (93) et / ou la phase de saisie (92) et pendant une phase de positionnement préliminaire (94), le serrage de l'unité de serrage sur la carte (2) est relâché,
- un deuxième capteur (22) détecte la fin de la phase de positionnement préliminaire (94) et la signale à la commande centralisée.

25. Procédé selon au moins l'une des revendications précédentes 21 à 24, **caractérisé par le fait que**,
- après la phase d'introduction, la phase de transport (93), la phase de saisie (92) et / ou la phase de positionnement préliminaire (94) et pendant une phase d'ajustage fin du positionnement (95), l'unité de verrouillage (50) se déplace dans une position verrouillée, dans laquelle l'obturateur (72) de l'ouverture d'introduction pour la carte (2) est verrouillé au moyen du au moins un organe de verrouillage (51), la carte (2) est, en même temps, transportée dans une position finale, dans laquelle des premiers contacts (11) d'un jeu de contacts (10) sont en liaison avec des deuxièmes contacts (11) de la carte (2),
- le premier capteur (21) détecte la position verrouillée de l'unité de verrouillage (50) et la signale à la commande centralisée,
- un quatrième capteur (24) détecte la position finale de la carte (2) et la signale à la commande centralisée.

26. Procédé selon au moins l'une des revendications précédentes 21 à 25, **caractérisé par le fait que**,
- après la phase d'introduction, la phase de transport (93), la phase de saisie (92), la phase de positionnement préliminaire (94) et/ou la phase d'ajustage fin du positionnement (95) et pendant une phase de sécurité (96), l'unité de blocage (60) se déplace dans la position de blocage, dans laquelle l'unité de verrouillage (50) est bloquée au moyen de l'unité de blocage (60),
- le deuxième capteur (22) détecte la position de blocage de l'unité de blocage (60), la signale à la commande centralisée
- et la commande centralisée arrête le mécanisme d'entraînement,
- si le laps de temps entre le signal, qui indique la fin de la phase de positionnement préliminaire (94), et le signal, qui indique que le au moins un organe de verrouillage (51) est parvenu dans la position verrouillée, n'est pas plus long qu'une certaine valeur,
- dans le cas contraire, la commande centralisée initie une opération destinée à rejeter la carte (2).

27. Procédé selon au moins l'une des revendications précédentes 21 à 26, **caractérisé par le fait que**,
- après la phase d'introduction, la phase de transport (93), la phase de saisie (92), la phase de positionnement préliminaire (94), la phase d'ajustage fin du positionnement (95) et / ou la phase de sécurité (96) et pendant une phase de transmission de données (97), des informations sont transmises entre la mémoire de la carte (2) et le dispositif de réception de cartes à puce (1), si le deuxième capteur (22) signale la position de blocage de l'unité de blocage (60) et si le premier capteur (21) signale la position verrouillée.

28. Procédé destiné à la réception d'une carte (2) au moyen d'un dispositif de réception de cartes à puce (1) conforme à au moins l'une des revendications précédentes 1 à 20, **caractérisé par le fait que**,
- pendant une phase d'introduction, la carte (2) est introduite dans le dispositif de réception de cartes à puce (1),
- un troisième capteur (23) détecte l'introduction de la carte (2), signale l'introduction à une commande centralisée et la commande centralisée met en circuit l'alimentation en énergie d'un mécanisme d'entraînement,
- pendant une phase de saisie (92), une unité de serrage serre la carte (2),
- pendant une phase de transport (93), la carte (2) est transportée dans le dispositif de réception de cartes à puce (1),
- pendant une phase de positionnement préliminaire (94), le serrage de l'unité de serrage est relâché de la carte (2),
- pendant une phase d'ajustage fin du positionnement (95), au moins un organe de verrouillage (51) d'une unité de verrouillage (50) se déplace dans une position verrouillée, dans laquelle un obturateur (72) d'une ouverture d'introduction pour la carte (2) est verrouillé au moyen du au moins un organe de verrouillage (51),
- la carte (2) est, en même temps, transportée dans une position finale,
- un premier capteur (21) détecte la position verrouillée du au moins un organe de verrouillage (51) et la signale à la commande centralisée,
- un quatrième capteur (24) détecte la position finale de la carte (2) et la signale à la commande centralisée,
- pendant une phase de sécurité (96), une unité de blocage (60) est déplacée dans une position de blocage, dans laquelle l'unité de verrouillage (50) est bloquée au moyen de l'unité de blocage (60),
- le deuxième capteur (22) détecte la position de blocage de l'unité de blocage (60), la signale à la commande centralisée et
- la commande centralisée arrête le mécanisme d'entraînement, si le laps de temps entre le signal, qui indique la fin de la phase de positionnement préliminaire (94), et le signal, qui indique que le au moins un organe de verrouillage (51) est parvenu dans la position verrouillée, n'est pas plus long qu'une certaine valeur, sinon la commande centralisée initie une opération destinée à rejeter la carte (2),
- pendant une phase de transmission de données (97), des informations sont transmises entre la mémoire de la carte (2) et le dispositif de réception de cartes à puce (1), si le deuxième capteur (22) signale la position de blocage de l'unité de blocage (60) et si le premier capteur (21) signale la position verrouillée.
